Europäisches Patentamt

European Patent Office

Office européen des brevets

(19)

(11) Veröffentlichungsnummer : **0 460 268 B1**

(12) # EUROPÄISCHE PATENTSCHRIFT

(45) Veröffentlichungstag der Patentschrift :
**12.04.95 Patentblatt 95/15**

(51) Int. Cl.$^6$ : **G02F 1/21,** G01J 9/02

(21) Anmeldenummer : **90110835.7**

(22) Anmeldetag : **07.06.90**

(54) **Integrierte optische Einrichtung zur interferometrischen Vermessung von Lichtwellen.**

(43) Veröffentlichungstag der Anmeldung :
**11.12.91 Patentblatt 91/50**

(45) Bekanntmachung des Hinweises auf die
Patenterteilung :
**12.04.95 Patentblatt 95/15**

(84) Benannte Vertragsstaaten :
**DE FR GB IT**

(56) Entgegenhaltungen :
**GB-A- 2 201 256
US-A- 4 515 430
US-A- 4 753 529**

(73) Patentinhaber : **LITEF GmbH
Lörracher Strasse 18
D-79115 Freiburg (DE)**

(72) Erfinder : **Wendler, Martin, Dipl.-Phys.
Basler Landstrasse 73
D-7800 Freiburg i.Br. (DE)**

(74) Vertreter : **TER MEER - MÜLLER -
STEINMEISTER & PARTNER
Mauerkircherstrasse 45
D-81679 München (DE)**

EP 0 460 268 B1

## Beschreibung

Die Erfindung betrifft eine Einrichtung in integrierter Optik auf einem anisotropen Substrat zur interferometrischen Vermessung von Lichtwellen, bei der die nach der Aufspaltung eines Lichtstrahls vorgesehenen Lichtwege definierte unterschiedliche Längen aufweisen.

Unbalancierte optische Interferometer sind Geräte, bei denen ein Lichtstrahl in mindestens zwei Teillichtstrahlen aufgespalten wird, die - nachdem sie definierte, ungleich lange Wege zurückgelegt haben - wieder zu einem Strahl vereinigt werden. Die Intensität des wiedervereinigten Gesamtstrahls ist aufgrund von Interferenz abhängig von der Phasendifferenz der beiden Teillichtstrahlen.

Unbalancierte Interferometer werden z. B. zur Wellenlängenstabilisierung einer Lichtquelle, zur Wellenlängenmessung, zur Frequenzanalyse von Licht oder zur Demodulation frequenzmodulierter optischer Signale benutzt.

Voraussetzung für die korrekte Funktion eines solchen Geräts ist, daß die gewählte optische Wegdifferenz, bestimmt als Brechungsindex x Wegdifferenz, sich nicht ändert. Insbesondere dürfen durch Temperaturänderungen hervorgerufene Längen- und Brechungsindexänderungen keinen Einfluß auf die optische Wegdifferenz haben. Dazu ist es bekannt, das Interferometer zu temperieren, also aktiv gesteuert immer auf derselben Temperatur zu halten. Andererseits ist es bekannt, strahlungsoptische Interferometer vollständig aus einem Material mit extrem geringer Wärmedehnung (z. B. Zerodur) aufzubauen.

Heutige Entwicklungsbestrebungen gehen in Richtung auf eine Miniaturisierung und Integration von optischen und optoelektronischen Bauelementen. In diesen integriert-optischen Bauteilen wird das Licht in Wellenleitern geführt, moduliert, überlagert und detektiert. Die aus Wellenleitern und Elektroden bestehenden Strukturen werden dabei auf die Oberfläche von transparenten Substraten aufgebracht, z. B. aus Lithium-Niobat, verschiedenen Halbleitern, Glas und Granat.

Aus US-A-4 515 430 ist ein unbalanciertes Interferometer in integrierter Optik bekannt, das für Temperaturänderungen besonders sensitiv ist und deshalb bevorzugt für Temperaturmessungen eingesetzt wird. Wie sich insbesondere aus der Formel (3) (Spalte 3, Zeile 27) dieser Druckschrift ersehen läßt, ist die Phasendifferenz zwischen den beiden ungleich langen Armen und damit das optische Signal neben der Längendifferenz nur noch von der Wellenlänge des benutzten Lichts abhängig. Bei Eliminierung der Temperatursensibilität bleibt aber immer noch die Wellenlängensensibilität zu berücksichtigen. Hierzu ist folgendes zu beachten:

Die meisten für solche integrierte Optikten (IO) verwendeten Materialien sind künstliche Einkristalle, bei denen unter anderem die thermische Ausdehnung und die thermische Änderung des Brechungsindex in den verschiedenen Kristallrichtungen verschieden groß, aber keinesfalls vernachlässigbar sind. Mit den bisher bekannten üblichen Techniken ist daher kein unbalanciertes, temperaturkompensiertes Interferometer in integrierter Optik zu verwirklichen. Die Temperierung des Bauteils wäre zwar vorstellbar, ist jedoch in den meisten Anwendungsfällen wegen des erforderlichen Energieverbrauchs und des geforderten weiten Temperaturbereichs nicht praktikabel.

Der Erfindung liegt damit die Aufgabe zugrunde, eine Einrichtung in integrierter Optik zur interferometrischen Vermessung von Lichtwellen ohne aktive Regelung zur thermischen Kompensation zu schaffen, bei der eine einmal eingestellte optische Wegdifferenz sich über einen größeren Temperaturbereich nicht ändert.

Die Erfindung ist bei einer Einrichtung zur interferometrischen Vermessung von Lichtwellen in integrierter Optik auf einem anisotropen Substrat, bei dem die nach der Aufspaltung eines Lichtstrahls vorgesehenen Lichtwellen definierte unterschiedliche Weglängen durchlaufen, dadurch gekennzeichnet, daß die Lichtwege nach geometrischer Lage in bezug auf die Achsen des Substrats und hinsichtlich ihrer Weglängen so gewählt sind, daß die optische Weglängendifferenz bei Temperaturänderung unverändert bleibt.

Das Grundprinzip läßt sich einfach am Beispiel von zwei Materialien mit unterschiedlicher Wärmeausdehnung und unterschiedlicher Länge erläutern, die sich bei einem bestimmten Längenverhältnis genau gleich stark ausdehnen. Die absolute Längendifferenz bleibt also stets konstant.

Für die Funktion der Erfindung wird eine von zwei verschiedenen physikalischen Tatsachen genutzt: Entweder findet der Effekt Anwendung, daß sich bestimmte anisotrope Materialien in verschiedenen Raumrichtungen thermisch unterschiedlich stark ausdehnen oder es wird die physikalische Erkenntnis angewandt, daß sich in bestimmten anisotropen Materialien die zu den unterschiedlichen Polarisationsrichtungen des Lichts gehörenden Brechungsindizes bei bestimmten optischen Ausbreitungsrichtungen thermisch unterschiedlich stark verändern. Es kann ebenso eine kombinierte Ausnutzung dieser beiden anisotropen Materialeffekte zur Anwendung kommen.

Die Lehre der Erfindung geht also dahin, ein integriert-optisches Interferometer mit optisch ungleich langen Armen oder Wegen auf einem Substratmaterial mit temperaturbedingter richtungsabhängiger Längenänderung und/oder Brechwertänderung so zu gestalten, daß unter gezielter Ausnutzung dieser verschiedenen Änderungs-Koeffizienten eine thermische Kompensation ohne aktive Regelung erzielt wird.

Verlaufen die beiden Arme oder Lichtwege eines balancierten Interferometers in Form zweier gleich langer Wellenleiter auf der Oberfläche eines IO-Substrats mit richtungsabhängiger Wärmedehnung in unterschiedlichen Richtungen, so ändert sich die optische Weglänge unterschiedlich stark. Unter diesen Umständen ist selbst ein balanciertes Interferometer niemals thermisch stabil zu erhalten. Sind gemäß der Erfindung die Arme oder Weglängen dagegen unterschiedlich lang, so zeigt sich bei einem bestimmten Längenverhältnis, daß sich die optische Wegdifferenz thermisch nicht ändert, nämlich dann, wenn sich die optischen Längen beider Wellenleiter genau um denselben Betrag ändern.

Die Erfindung wird nachfolgend am Beispiel eines Michelson-Interferometers erläutert. Die Erfindung ist jedoch auf diese spezielle Interferometerart nicht beschränkt. Ebenso gut lassen sich andere Arten von temperaturkompensierten Interferometern, z. B. Mach-Zehnder-Interferometer, verwirklichen.

Beispielsweise Ausführungsformen der Erfindung werden nachfolgend unter Bezug auf zwei Zeichnungsfiguren näher erläutert. Es zeigen:

Fig. 1    ein Michelson-Interferometer in integrierter Optik mit einem einzigen Koppler und zwei am offenen Ende verspiegelten Wellenleiterstücken und

Fig. 2    ein Mach-Zehnder-Interferometer in integrierter Optik, bei dem eingestrahltes Licht an einem Koppler auf zwei Wellenleiter aufgeteilt wird und nach Durchlaufen getrennter Wege an einem zweiten Koppler wieder zusammengeführt wird.

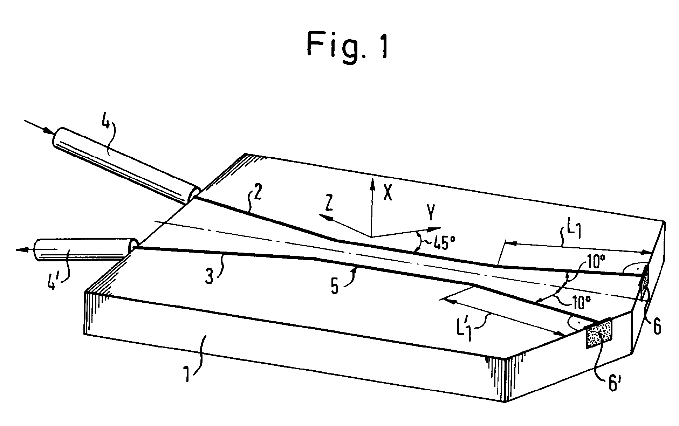

Das in Fig. 1 zur Verdeutlichung der Erfindung dargestellte Michelson-Interferometer dient lediglich zur weiteren Erläuterung des Grundgedankens, ohne den möglichen Anwendungsbereich der Erfindung einzuschränken. Das dargestellte Michelson-Interferometer enthält titandiffundierte monomodige Wellenleiter auf einem X-Schnitt-LiNbO$_3$-Substrat 1. Die Eingangs- und Ausgangswellenleiter 2 und 3 sind einerseits über eine Anschlußverbindung 4 mit einer nicht dargestellten Lichtquelle von z. B. 830 nm Wellenlänge und andererseits über eine Anschlußverbindung 4' mit einem ebenfalls nicht gezeigten Detektor verbunden.

In einem Koppelbereich 5 wird z. B. X-polarisiertes Licht zum Teil vom Eingangswellenleiter 2 auf den Ausgangswellenleiter übergekoppelt. Beide Wellenleiter 2, 3 sind am vom Koppelbereich 5 entfernten Substratende mit reflektierenden Beschichtungen 6 und 6' abgeschlossen.

Das von den Beschichtungen 6, 6' zurückreflektierte Licht aus den beiden Wellenleitern interferiert im Koppelbereich 5. Je nach Phasendifferenz wird das Licht mehr in den Wellenleiter 2 oder in den Wellenleiter 3 geschickt. Das daraus entstehende Intensitätssignal gelangt über die Anschlußverbindung 4' zum Detektor.

Die Phasenlage im Koppelbereich hängt von dem Unterschied der Wege $L_1$ bzw. $L_1'$ zwischen dem Koppelbereich 5 und den reflektierenden Beschichtungen 6, 6', also vom Wegunterschied schied $L_1 - L_1'$, sowie vom Brechungsindex n entlang der Wellenleiter und von der Wellenlänge des Lichts ab. Der LiNbO$_3$-Kristall dehnt sich in Y-Richtung thermisch doppelt so stark aus wie in Z-Richtung. Andererseits ändert sich der Brechungsindex bei X-Polarisation in den beiden optischen Wegen $L_1$, $L_1'$ gleich stark.

Wird, wie in der Zeichnung dargestellt, z. B. die Abweichung der beiden Wege $L_1$ und $L_1'$ von der 45°-Richtung zur Y-Achse mit ± 10° gewählt, so ergeben sich folgende Absolutwerte:

| Thermischer Ausdehnungs-koeffizient | Thermische Änderung des Brechungsindex | Winkel zwischen Wellenleiter und Y-Achse |
|---|---|---|
| $L_1$:   $\alpha_1 = 12{,}8 \cdot 10^{-6}$ | $d = 1{,}7 \cdot 10^{-6}$ | $\theta_1 = 35°$ |
| $L_1'$:   $\alpha_1' = 10{,}1 \cdot 10^{-6}$ | $d = 1{,}7 \cdot 10^{-6}$ | $\theta_1' = 55°$ |

Wenn sich bei Temperaturänderung die Größen $L_1 \cdot n$ und $L_1' \cdot n$ absolut um denselben Betrag $\delta$ ändern, so bleibt die optische Wegdifferenz $L_1 \cdot n - L_1' \cdot n$ konstant. Es gilt dann

$$L_1 \cdot n - L_1' \cdot n = (L_1 \cdot n + \delta) - (L_1' \cdot n + \delta)$$
$$(L_1 - L_1') \cdot n = (L_1 - L_1') \cdot n$$

Für die thermische Änderung des optischen Wegs ergibt sich dann in erster Näherung folgendes:

$$\delta(T) = L \cdot n (\alpha + d) \cdot T$$
$$\rightarrow L_1 \cdot n (\alpha_{1(\theta 1)} + d) \cdot T = L_1' \cdot n (\alpha_1'_{(\theta 1')} + d) \cdot T$$
$$\frac{L_1}{L_1'} = \frac{(\alpha_1' + d)}{(\alpha_1 + d)} = \frac{11{,}8 \cdot 10^{-6}}{14{,}5 \cdot 10^{-6}}$$

$$\frac{L_1}{L_1'} = 0{,}8138$$

Dieses Beispiel verdeutlicht nur eine von vielen Realisierungsmöglichkeiten im Rahmen der Erfindung.

Im Prinzip sind die Polarisationsrichtung des Lichts, der Kristallschnitt des Substrats, d. h. der Waferplatte, die Ausbreitungsrichtung des Lichts und der Interferometer-Typ unerheblich. Eine Lösung des zugehörigen Gleichungssystems ist praktisch immer möglich. Das Substratmaterial muß lediglich die Voraussetzung erfüllen, daß sich darauf Wellenleiter herstellen lassen und daß sich die Länge und/oder der Brechungsindex bei Temperaturänderung in verschiedenen Raumrichtungen unterschiedlich stark ändern. Dabei kann der Umfang der theoretischen Beschreibung von Fall zu Fall unterschiedlich sein. Das obige Beispiel verdeutlich die theoretische Beschreibung für einen einfachen Fall, um das Prinzip verständlich zu machen.

Für eine genauere theoretische Beschreibung der Erfindung sind drei wichtige Formeln nötig: Die Winkelabhängigkeit des Brechungsindex und seine thermische Änderung sowie die Abhängigkeit des thermischen Ausdehnungskoeffizienten vom Winkel. Die dazu nötigen Formeln und Materialkonstanten sind bekannt und für alle relevanten Materialien in der einschlägigen Literatur nachzulesen. Damit stehen der Brechungsindex $n(\theta)$, dessen thermischer Änderungskoeffizient $d(\theta)$ sowie der thermische Ausdehnungskoeffiziente $\alpha(\theta)$ zur Verfügung.

Daraus läßt sich die Grundgleichung aufstellen, welche die Gleichheit der thermischen Änderung zweier optischer Wege beschreibt. Dabei kann ein Interferometer aus beliebig vielen geraden Teilstücken bestehen, deren Summe den gesamten Interferometerarm beschreibt. In der Praxis wird jeder Arm aus möglichst wenigen geraden Teilstücken bestehen.

$$\sum_{i=1}^{m} L_i\, n_{i(\theta i)}\, (\alpha_{i(\theta i)} + d_{i(\theta i)}) = \sum_{k=1}^{n} L_k' \cdot n_{k(\theta k')}'\, (\alpha_{k(\theta k')}' + d_{k(\theta k')}')$$

Die gewünschte optische Wegdifferenz bestimmt sich zu

$$\sum_{i=1}^{m} L_i n_{i(\theta i)} - \sum_{k=1}^{n} L_k' n_{k(\theta k')} = \Delta L$$

Zur Aufspaltung des Lichts stehen in der integrierten Optik zwei Möglichkeiten zur Verfügung, die Stand der Technik sind, nämlich:

- Die polarisationsunabhängige Aufteilung (Y-Verzweigung, Richtkoppler), bei der die eingestrahlte Lichtintensität unabhängig von ihrem Polarisationszustand auf die beiden Wellenleiter aufgeteilt wird. Sinnvoll ist es, bei diesen Kopplern Licht zu benutzen, das parallel zu einer Kristall-Hauptachse polarisiert ist.
- Die polarisationsabhängige Aufteilung (polarisationsabhängige Richtkoppler). Dabei wird von der eingestrahlten Lichtintensität der Anteil, der senkrecht zur optischen Achse polarisiert ist, in den einen Wellenleiter geleitet und das senkrecht dazu polarisierte Licht in den anderen Wellenleiter. Strahlt man in diesen Kopplertyp unter 45° zu der Kristall-Hauptachse polarisiertes Licht ein, so breitet sich in den beiden Interferometerarmen senkrecht zueinander polarisiertes Licht aus.

Vor allem zwei heute bekannte und in integrierter Optik verwirklichte Interferometertypen lassen sich erfindungsgemäß temperaturstabilisieren:

1) Das Michelson-Interferometer, welches aus einem einzigen Koppler und zwei am Ende verspiegelten Wellenleiterstücken besteht. Das Informationssignal wird an demselben Koppler entnommen, an dem auch das Licht eingekoppelt wird (siehe Fig. 1).

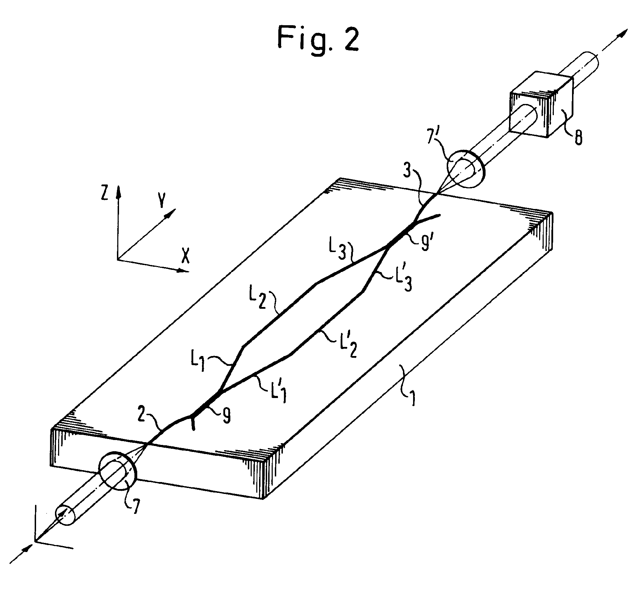

2) Das Mach-Zehnder-Interferometer, bei welchem das eingestrahlte Licht an einem Koppler auf zwei Wellenleiter aufgeteilt wird, welche getrennte Wege zurücklegen und an einem zweiten Koppler wieder zusammengeführt werden. Nach dem zweiten Koppler steht dann das gewünschte Interferometersignal zur Verfügung (siehe Fig. 2).

Zur Realisierung gibt es drei grundsätzliche Möglichkeiten:

## 1. Prinzip

Die Polarisationsrichtung des eingestrahlten Lichts wird so gewählt, daß die thermische Änderung des Brechungsindex in allen Lichtwegen gleich groß ist. Dabei unterscheiden sich die beiden Interferometerarme also nur hinsichtlich ihres thermischen Ausdehnungskoeffizienten, während der Brechungsindex und seine thermische Änderung in beiden Armen gleich sind. Dazu ist eine Kristallscheibe erforderlich, bei der die polare Achse parallel zur Oberfläche liegt (X- oder Y-Schnitt). Die Polarisation des Lichts muß in beiden Wellenleitern senkrecht zur optischen Achse liegen.

Die Hauptgleichung hat dann folgende Form:

$$\sum_{i=1}^{n} L_i \, n(\alpha_{i(\Theta i)} + d) = \sum_{k=1}^{m} L_k' \, n \, (\alpha_{k(\Theta k)}' + d)$$

Beide Interferometertypen lassen sich nach diesem Prinzip verwirklichen. Das Beispiel der Fig. 1 zeigt ein Michelson-Interferometer mit polarisationsunabhängigem Koppler und jeweils einem Wellenleiterstück pro Arm, das nach diesem Prinzip funktioniert.

## 2. Prinzip

Der Koppelbereich zwischen den Lichtwegen ist so gestaltet, daß sich in den beiden Lichtwegen Licht mit senkrecht zueinander stehenden Polarisationsrichtungen ausbreitet. Dadurch ist die thermische Änderung des Brechungsindex für verschiedene Ausbreitungsrichtungen unterschiedlich groß, d. h. nur der Brechungsindex und dessen thermische Änderung unterscheiden sich in beiden Armen. Die thermische Ausdehnung ist dagegen in beiden Armen gleich. Dazu ist eine Kristallscheibe nötig, die so geschnitten ist, daß der thermische Ausdehnungskoeffizient in allen Richtungen parallel zur Oberfläche gleich ist. Die polare Achse steht dabei senkrecht zur Oberfläche (Z-Schnitt). Die Polarisationsrichtungen des Lichts in den beiden Wellenleitern müssen senkrecht zueinander verlaufen, weshalb nur ein polarisationsabhängiger Koppler verwendet werden kann.

Die Hauptgleichung hat dann folgende Form:

$$\sum_{i=1}^{m} L_i \, n(\alpha + d) = \sum_{k=1}^{n} L_k' \, n' \, (\alpha + d')$$

Beide Interferometertypen lassen sich mit diesem Prinzip verwirklichen.

Das Beispiel der Fig. 2 verdeutlicht ein Mach-Zehnder-Interferometer mit jeweils drei geraden Wellenleiterstücken pro Arm, das nach diesem Prinzip funktioniert. Dieses Mach-Zehnder-Interferometer enthält titandiffundierte monomodige Wellenleiter auf einem Z-Schnitt-LiNbO$_3$-Substrat 1 und dient als Beispiel für das zweite Prinzip. In den Eingangswellenleiter 2 wird strahlenoptisch über eine Linse 7 unter 45° zur Substratoberfläche polarisiertes Licht eingestrahlt. Vom Ausgangswellenleiter 3 wird das Licht über eine weitere Linse 7' und den Polarisator 8 strahlenoptisch zu einem nicht dargestellten Detektor geleitet. Ein Koppler 9 ist so gestaltet, daß parallel zur Oberfläche polarisiertes Licht in den Interferometerarm, welcher aus den geraden Wellenleiterstücken L$_1$, L$_2$ und L$_3$ besteht, geleitet wird. Senkrecht dazu polarisiertes Licht wird in den anderen Interferometerarm, welcher aus den geraden Wellenleiterstücken L$_1$, L$_2$ und L$_3$ besteht, geleitet. An einem weiteren Koppler 9' wird das Licht aus den beiden Armen wieder zusammengeführt und in den Ausgangswellenleiter 3 geschickt.

Die Polarisationsrichtung des wieder vereinigten Lichts hängt von der Phasendifferenz zwischen den beiden Polarisationsrichtungen und damit von der Längendifferenz zwischen beiden Armen ab und wird im Polarisator in eine Intensitätsinformation umgewandelt.

Bei z. B. 830 nm Lichtwellenlänge ergeben sich folgende Werte:

| | Thermischer Ausdehnungs-koeffizient | Brechungsindex index | Thermische Änderung des Brechungsindex |
|---|---|---|---|
| L: | $\alpha = 15,4 \cdot 10^{-6}$ | $n = 2,252$ | $d = 1,7 \cdot 10^{-6}$ |
| L': | $\alpha' = 15,4 \cdot 10^{-6}$ | $n' = 2,172$ | $d' = 20 \cdot 10^{-6}$ |

$$\sum_{i=1}^{3} L_i \, n \, (\alpha + d) = \sum_{k=1}^{3} L'_k \, n' \, (\alpha + d')$$

$$\frac{L_1 + L_2 + L_3}{L'_1 + L'_2 + L'_3} = \frac{n' \cdot (\alpha + d')}{n \cdot (\alpha + d)} = \frac{2,172 \cdot (15,4 + 20) \cdot 10^{-6}}{2,252 \cdot (15,4 + 1,7) \cdot 10^{-6}}$$

$$\frac{L}{L'} = 1,9966$$

### 3. Prinzip

Die Polarisation des eingestrahlten Lichts wird so gewählt, daß die thermische Änderung des Brechungsindex für verschiedene Ausbreitungsrichtungen unterschiedlich groß ist. Mit anderen Worten, es gilt jetzt, daß sowohl der Brechungsindex und dessen thermische Änderung als auch die thermische Ausdehnung in beiden Interferometerarmen unterschiedlich sind. Dazu ist eine Kristallscheibe erforderlich, bei der die polare Achse parallel zur Oberfläche liegt (X- oder Y-Schnitt). Mindestens in einem Interferometerarm muß die Polarisation parallel zur Oberfläche liegen.

Die Hauptgleichung hat folgende Form:

$$\sum_{i=1}^{m} L_i \, n_{i(\theta i)} \cdot (\alpha_{i(\theta i)} + d_{i(\theta i)}) = \sum_{k=1}^{m} L'_k \, n'_{k(\theta k')} \cdot \alpha'_{k(\theta k')} + d'_{k(\theta k')})$$

Beide Interferometertypen lassen sich nach diesem Prinzip verwirklichen.

### Literaturhinweise:

(1) Armin Räuber: "Chemistry and Physics of Lithium Niobate", Current Topics in Materials Science, Vol. I, Chapter 7, Hrsg. E. Kaldis, North-Holland Publishing Company, 1978

(2) "Guided-Wave Optoelectronics", Hrsg. T. Tamir, Springer-Verlag Berlin, Heidelberg, New-York, London, Paris, Tokyo, 1988

### Patentansprüche

1.  Einrichtung zur interferometrischen Vermessung von Lichtwellen in integrierter Optik auf einem anisotropen Substrat (1), bei dem die nach der Aufspaltung eines Lichtstrahls vorgesehenen Lichtwege (L, L') definierte unterschiedliche optische Weglängen aufweisen, **dadurch gekennzeichnet,** daß die Richtung der Lichtwege und ihre Weglänge (L, L') in bezug auf die Kristallachsen (X, Y, Z) des Substrats (1) unter Berücksichtigung der Polarisationsrichtung des eingestrahlten Lichts so gewählt sind, daß die optische Weglängendifferenz bei Temperaturänderung unverändert bleibt.

2.  Einrichtung nach Anspruch 1, **dadurch gekennzeichnet,** daß die geometrische Lage der Lichtwege und deren Länge (L, L') unter Berücksichtigung des anisotropen Materialeffekts unterschiedlicher Wärmedehnungs-Koeffizienten in verschiedenen Raumrichtungen des Substrats gewählt sind.

3. Einrichtung nach Anspruch 1, **dadurch gekennzeichnet,** daß die geometrische Lage der Lichtwege und deren Länge unter Berücksichtigung des anisotropen Materialeffekts unterschiedlicher thermischer Änderung des Brechungsindex, in verschiedenen Raumrichtungen des Substrats, gewählt ist

4. Einrichtung nach Anspruch 1, **dadurch gekennzeichnet,** daß die geometrische Lage der Lichtwege und deren Länge unter Berücksichtigung des anisotropen Materialeffekts unterschiedlicher Wärmeausdehnungs-Koeffizienten in verschiedenen Raumrichtungen des Substrats sowie des anisotropen Materialeffekts unterschiedlicher thermischer Änderungen des Brechungsindex in verschiedenen Raumrichtungen des Substrats gewählt sind.

5. Einrichtung nach einem der vorstehenden Ansprüche, **dadurch gekennzeichnet,** daß die interferometrische Vermessungseinrichtung ein Michelson-Interferometer enthält.

6. Einrichtung nach einem der vorstehenden Ansprüche, **dadurch gekennzeichnet,** daß die interferometrische Vermessungseinrichtung ein Mach-Zehnder-Interferometer enthält.

## Claims

1. Device for the interferometric measurement of light waves utilizing integrated optics on an anisotropic substrate (1), in which the light paths (L, L') provided after the splitting of a light beam exhibit defined differing optical path lengths, characterized in that the direction of the light paths and their path length (L, L') are selected with respect to the crystal axes (X, Y, Z) of the substrate (1) having regard to the direction of polarization of the injected light so that the optical path length difference remains unchanged in the event of a temperature change.

2. Device according to Claim 1, characterized in that the geometric position of the light paths and their length (L,L') are selected having regard to the anisotropic material effect of differing coefficients of thermal expansion in differing spatial directions of the substrate.

3. Device according to Claim 1, characterized in that the geometric position of the light paths and their length are selected having regard to the anisotropic material effect of differing thermal change of the refractive index in differing spatial directions of the substrate.

4. Device according to Claim 1, characterized in that the geometric position of the light paths and their length are selected having regard to the anisotropic material effect of differing coefficients of thermal expansion in differing spatial directions of the substrate as well as to the anisotropic material effect of differing thermal changes of the refractive index in differing spatial directions of the substrate.

5. Device according to one of the preceding claims, characterized in that the interferometric measurement device includes a Michelson interferometer.

6. Device according to one of the preceding claims, characterized in that the interferometric measurement device includes a Mach-Zehnder interferometer.

## Revendications

1. Dispositif pour la mesure interférométrique d'ondes lumineuses en optique intégrée sur un substrat anisotrope (1) dans lequel les chemins optiques (L, L') prévus après la division d'un faisceau lumineux présentent des longueurs de chemin optique différentes définies, caractérisé en ce que l'orientation des chemins optiques et leurs longueurs (L, L') par rapport aux axes cristallographiques (X, Y, Z) du substrat (1) sont choisies en tenant compte de la direction de polarisation de la lumière incidente de telle façon que la différence entre les chemins optiques reste inchangée lors d'une variation de la température.

2. Dispositif selon la revendication 1, caractérisé en ce que, en tenant compte de l'effet de matériel anisotrope de différents coefficients de dilatation thermique, la position géométrique des chemins optiques et leurs longueurs (L, L') sont choisies dans différentes directions spatiales du substrat.

3.  Dispositif selon la revendication 1, caractérisé en ce que, en tenant compte de l'effet de matériel anisotrope d'une différence de variation thermique de l'indice de réfraction, la position géométrique des chemins optiques et leurs longueurs sont choisies dans différentes directions spatiales du substrat.

4.  Dispositif selon la revendication 1, caractérisé en ce que, en tenant compte de l'effet de matériel anisotrope de différents coefficients de dilatation thermique dans différentes directions spatiales du substrat ainsi que de l'effet de matériel anisotrope d'une différence de variation thermique de l'indice de réfraction, la position géométrique des chemins optiques et leurs longueurs sont choisies dans différentes directions spatiales du substrat.

5.  Dispositif selon l'une quelconque des revendications précédentes, caractérisé en ce que le dispositif de mesure interférométrique comprend un interféromètre de Michelson.

6.  Dispositif selon l'une quelconque des revendications précédentes, caractérisé en ce que le dispositif de mesure interférométrique comprend un interféromètre de Mach-Zehnder.

# Fig. 1

# Fig. 2